# EUROPEAN PATENT APPLICATION

(11) **EP 4 811 229 A1**
(43) Date of publication of application: **23.09.2026**
(21) Application number: 25164402.7
(22) Date of filing: 18.03.2025
(51) Int. Cl.: G06N 20/00, G01H 9/00, B61L 23/04

(54) **METHOD FOR TRAINING A MACHINE LEARNING ALGORITHM AND DATA PROCESSING SYSTEM**

(71) Applicant: Sensonic GmbH, 4780 Schärding (AT)
(72) Inventor: Fuchs, Florian, Pocking (DE); Vera Di Vaio, Matheus, Wien (AT)
(74) Representative: Epping - Hermann - Fischer

(57) **Abstract**

A method for training a machine learning algorithm is provided, the method comprising training the machine learning algorithm to identify a type of event by providing the machine learning algorithm with negative sensor data, the negative sensor data comprising sensor data (11) detected by at least one distributed acoustic sensor (21) during events that are different from the type of event to be identified, classifying of sensor data (11) detected by at least one distributed acoustic sensor (21) by the machine learning algorithm into at least three classes of events, the first class comprising the sensor data (11) being classified as positive sensor data, the positive sensor data comprising sensor data (11) detected by the at least one distributed acoustic sensor (21) during at least one event of the type of event to be identified, the second class comprising the sensor data (11) being classified as negative sensor data and the third class comprising sensor data (11) being classified as positive sensor data or negative sensor data with a certainty of less than 100 %, and providing the machine learning algorithm with the information if the type of event to be identified took place during the detection of sensor data (11) classified in the third class for at least one event classified in the third class. Furthermore, a method for monitoring a linear asset, a data processing system and a monitoring unit are provided.

## Description

A method for training a machine learning algorithm, a computer program product, a method for monitoring a linear asset, a data processing system and a monitoring unit for monitoring a linear asset are provided.

Distributed acoustic sensing can be employed for monitoring linear assets as for example railway tracks. For this purpose, a laser pulse is fed into an optical fiber extending along a railway track. By analyzing the backscattered signal, vibrations on and around the railway track can be detected. Noise can relate to events along the railway track, such as a moving rail vehicle, persons moving on or around the railway track, a rock fall or a defect of the rail. The backscattered signal can be employed to differentiate between different events.

However, different events might lead to similar backscattered signals. Thus, it is more difficult to correctly identify these events. The identification is even more difficult for events that only happen rarely.

It is an objective to provide a method for training a machine learning algorithm, a computer program product, a method for monitoring a linear asset, a data processing system and a monitoring unit for monitoring a linear asset with an improved accuracy.

These objectives are achieved with the independent claims. Further embodiments are the subject of dependent claims.

According to at least one embodiment of the method for training a machine learning algorithm, the method comprises training the machine learning algorithm to identify a type of event by providing the machine learning algorithm with negative sensor data, the negative sensor data comprising sensor data detected by at least one distributed acoustic sensor during events that are different from the type of event to be identified. The distributed acoustic sensor can be arranged along a linear asset. The linear asset can be or comprise a railway track, a road, a fence, a pipeline, a boarder or a power line.

Along the linear asset, different types of events can occur. For example, a rail vehicle can pass one position along the linear asset. Thus, the passage of a rail vehicle can be one type of event. Another type of event can be a rock fall onto the linear asset or in the vicinity of the linear asset. Before analyzing the detected sensor data, the type of event is not known. Therefore, the machine learning algorithm is trained to identify a type of event. The machine learning algorithm can thus be trained to provide the information if a type of event to be identified is detected. For example, the type of event to be identified is a rock fall. Events that are different from the type of event to be identified are for example the passage of a rail vehicle, thermal expansion of a rail or movement of humans or animals. This means, the negative sensor data comprises sensor data that is detected during events that are not the type of event to be identified which can be a rock fall. The negative sensor data can comprise sensor data detected during events that are for example the passage of a rail vehicle, thermal expansion of the rail or movement of humans or animals.

The negative sensor data can comprise at least two sets of sensor data. For each set of sensor data, one event took place during the detection of the set of sensor data. The negative sensor data can comprise a plurality of sets of sensor data.

The negative sensor data can comprise sensor data detected by one distributed acoustic sensor. It is also possible that the negative sensor data comprises sensor data detected by several distributed acoustic sensors.

The sensor data can be backscattered signals of an input signal which is provided to an optical fiber. The distributed acoustic sensor can comprise the optical fiber. The optical fiber can extend along a linear asset. The optical fiber can be arranged within the ground close to the linear asset. It is further possible that the optical fiber is arranged above the ground close to the linear asset. The optical fiber extends approximately parallel to the linear asset. The input signal can be an optical signal, for example a laser pulse. The input signal is provided to the optical fiber at an input of the optical fiber. A small part of the laser light is reflected back to the input since the laser light is scattered at scatter sites, as for example impurities in the optical fiber which can be natural or artificial. Changes in the backscattered signal are related to physical changes in the optical fiber which can be caused by noise, structure-borne noise, vibrations or soundwaves along the optical fiber. Therefore, a backscattered signal can be detected when noise occurs around the linear asset. By evaluating the backscattered signal, the location of the noise can be determined. The sensor data can comprise data derived from the backscattered signals for different positions along the linear asset and/or different points in time.

The machine learning algorithm can be stored on a computer or a storage medium. The machine learning algorithm can be configured to be run on a computer. The machine learning algorithm may also be denoted as a machine learning model and/or a data driven model.

The machine learning algorithm can be provided with the information that the type of event to be identified did not take place during the detection of the negative sensor data.

According to at least one embodiment of the method for training a machine learning algorithm, the method comprises classifying of sensor data detected by at least one distributed acoustic sensor by the machine learning algorithm into at least three classes of events, the first class comprising the sensor data being classified as positive sensor data, the positive sensor data comprising sensor data detected by the at least one distributed acoustic sensor during at least one event of the type of event to be identified, the second class comprising the sensor data being classified as negative sensor data and the third class comprising sensor data being classified as positive sensor data or negative sensor data with a certainty of less than 100 %. For classifying sensor data, the machine learning rhythm can be provided with sensor data. The sensor data can be detected by one distributed acoustic sensor or by several distributed acoustic sensors. The machine learning algorithm can be configured to classify sensor data into the at least three classes of events. The machine learning algorithm can be configured to classify sensor data unambiguously. This can mean, that the same sensor data is classified in only one of the at least three classes. This can also mean that none of the sensor data is classified in more than one of the at least three classes.

The positive sensor data can comprise at least one set of sensor data. For each set of sensor data, one event took place during the detection of the set of sensor data. The positive sensor data can comprise at least two or a plurality of sets of sensor data. The positive sensor data can be detected by one distributed acoustic sensor or by several distributed acoustic sensors.

During the detection of each set of sensor data of the positive sensor data one event of the type of event to be identified took place. That the positive sensor data comprises sensor data detected by the at least one distributed acoustic sensor during at least one event of the type of event to be identified, can mean, that the positive sensor data comprises at least one set of sensor data that is detected while one event of the type of event to be identified took place.

That the third class comprises sensor data being classified as positive sensor data or negative sensor data with a certainty of less than 100 % can mean, that the machine learning algorithm can classify the sensor data of the third class only with a certainty of less than 100 %. The third class comprises sensor data being classified as positive sensor data with a certainty of less than 100 % or as negative sensor data with a certainty of less than 100 %.

This does not necessarily mean that all sensor data that is classified by the machine learning algorithm with a certainty of less than 100 % is comprised by the third class. It is for example possible that the third class comprises sensor data being classified as positive sensor data or as negative sensor data with a certainty that is below a predefined threshold. The predefined threshold can be less than 95 %. For example, the predefined threshold is less than 90 % or less than 80 %.

It is possible that the same set of sensor data is classified in the first class and in the third class. It is possible that a set of sensor data is classified in the first class and in the third class if the respective set of sensor data is classified with a certainty below the predefined threshold and above a further predefined threshold. The further predefined threshold can be lower than the predefined threshold. For example, the further predefined threshold is less than 90 % or less than 80 %. It is also possible that the same set of sensor data is classified in the second class and in the third class. It is possible that a set of sensor data is classified in the second class and in the third class if the respective set of sensor data is classified with a certainty below the predefined threshold and above the further predefined threshold. In this way, the same set of sensor data can be employed twice for training the machine learning algorithm.

According to at least one embodiment of the method for training a machine learning algorithm, the method comprises providing the machine learning algorithm with the information if the type of event to be identified took place during the detection of sensor data classified in the third class for at least one event classified in the third class. This can mean, that the method comprises providing the machine learning algorithm with the information if the type of event to be identified took place during the detection of at least one set of sensor data classified in the third class. The information if the type of event to be identified took place during the detection of sensor data can be retrieved by inspecting the place where the sensor data is detected.

According to at least one embodiment of the method for training a machine learning algorithm, the method comprises training the machine learning algorithm to identify a type of event by providing the machine learning algorithm with negative sensor data, the negative sensor data comprising sensor data detected by at least one distributed acoustic sensor during events that are different from the type of event to be identified, classifying of sensor data detected by at least one distributed acoustic sensor by the machine learning algorithm into at least three classes of events, the first class comprising the sensor data being classified as positive sensor data, the positive sensor data comprising sensor data detected by the at least one distributed acoustic sensor during at least one event of the type of event to be identified, the second class comprising the sensor data being classified as negative sensor data and the third class comprising sensor data being classified as positive sensor data or negative sensor data with a certainty of less than 100 %, and providing the machine learning algorithm with the information if the type of event to be identified took place during the detection of sensor data classified in the third class for at least one event classified in the third class.

Distributed acoustic sensing can be employed for monitoring linear assets such as railway tracks. Different types of events can be identified in sensor data detected by distributed acoustic sensors. The method for training a machine learning algorithm described herein enables that the accuracy of identifying an event is improved. For this purpose, the machine learning algorithm is not only trained with sensor data that is detected while the event of the type of event to be identified takes place, this means with positive sensor data, but also with negative sensor data which is detected while a different type of event takes place. In this way, the machine learning algorithm can be provided with a significantly larger amount of data for training.

This is in particular advantageous for the identification of rare events which cause the sensor data to be similar to sensor data detected during another type of event that happens more often. This means, for the rare type of event only a small amount of positive sensor data is available. If there is another type of event that happens more often and that leads to similar sensor data, a large amount of negative sensor data is available. In the method for training a machine learning algorithm described herein also this negative sensor data is employed for training the machine learning algorithm. Positive sensor data is not necessarily required to train the machine learning algorithm. In this way, the accuracy of identifying the type of event to be identified is improved.

Furthermore, the third class of events is employed which gives the opportunity that the machine learning algorithm distinguishes between sensor data that can be classified with a certainty of 100 % and sensor data that can be classified with a certainty of less than 100 %. Only for the sensor data that is classified with a certainty of less than 100 %, the machine learning algorithm is provided with the information if an event of the type of event to be identified took place. This enables that even more sensor data, namely the sensor data classified in the third class, is employed for training the machine learning algorithm. With more sensor data being provided for training the machine learning algorithm, the accuracy of the machine learning algorithm is improved.

According to at least one embodiment of the method for training a machine learning algorithm, the method further comprises training the machine learning algorithm to identify the type of event to be identified by providing the machine learning algorithm with positive sensor data. This can mean, that the machine learning algorithm is provided with at least one set of sensor data that was detected while one event of the type of event to be identified took place. The machine learning algorithm can be provided with the information that the type of event to be identified took place during the detection of the positive sensor data. By providing the machine learning algorithm with positive sensor data, the machine learning algorithm can be trained to identify the type of event to be identified.

According to at least one embodiment of the method for training a machine learning algorithm, the amount of positive sensor data that the machine learning algorithm is trained with is smaller than the amount of negative sensor data that the machine learning algorithm is trained with. This can mean, that the number of sets of sensor data comprising positive sensor data and being provided to the machine learning algorithm for training is smaller than the number of sets of sensor data comprising negative sensor data and being provided to the machine learning algorithm for training. With this, it is possible to train the machine learning algorithm for the situation that the type of event to be identified and another type of event lead to similar sensor data, and the type of event to be identified happens less often than the other type of event that leads to similar sensor data.

According to at least one embodiment of the method for training a machine learning algorithm, the type of event to be identified is a rock fall. The type of event to be identified can be a rock fall in the vicinity of the distributed acoustic sensor. If the distributed acoustic sensor is arranged along a linear asset, it is likely that the rock fall also has an impact on the linear asset. Therefore, it is advantageous to detect if a rock fall took place.

Sensor data detected during so-called thermal pops can look similar to sensor data detected during a rock fall. Thermal pops are small impulsive movements of a railway track caused by a temperature change. The method for training a machine learning algorithm described herein has the advantage that the machine learning algorithm can be trained to distinguish between a rock fall and a thermal pop. This can be achieved by providing the machine learning algorithm with negative sensor data, wherein during the detection of the negative sensor data for example thermal pops occur. As thermal pops occur frequently, a large amount of negative sensor data can be provided to the machine learning algorithm which can improve the ability of the machine learning algorithm to correctly identify a type of event to be identified, such as a rock fall. For training the machine learning algorithm, the machine learning algorithm can also be provided with positive sensor data, wherein during the detection of the positive sensor data at least one rock fall occurs.

According to at least one embodiment of the method for training a machine learning algorithm, the type of event to be identified is a landslide, a thermal pop, movement of a human being, movement of an animal, manual digging, machine digging, cable theft, tampering or a track defect. The machine learning algorithm can advantageously also be trained to identify these types of events.

According to at least one embodiment of the method for training a machine learning algorithm, the method further comprises training the machine learning algorithm to identify a further type of event by providing the machine learning algorithm with further negative sensor data, the further negative sensor data comprising sensor data detected by at least one distributed acoustic sensor during events that are different from the further type of event to be identified, classifying of sensor data detected by at least one distributed acoustic sensor by the machine learning algorithm into at least three classes of further events, the first class comprising the sensor data being classified as further positive sensor data, the further positive sensor data comprising sensor data detected by the at least one distributed acoustic sensor during at least one event of the further type of event to be identified, the second class comprising the sensor data being classified as further negative sensor data and the third class comprising sensor data being classified as further positive sensor data or further negative sensor data with a certainty of less than 100 %, and providing the machine learning algorithm with the information if the further type of event to be identified took place during the detection of sensor data classified in the third class for at least one event classified in the third class, wherein the further type of event is a subset of the type of event or the further type of event is different from the type of event. The further type of event can be a landslide, a thermal pop, movement of a human being, movement of an animal, a passing rail vehicle, manual digging, machine digging, cable theft, tampering or a track defect.

All features disclosed for the type of event to be identified are also disclosed for the further type of event to be identified. All features disclosed for the negative sensor data are also disclosed for the further negative sensor data. All features disclosed for the positive sensor data are also disclosed for the further positive sensor data.

The machine learning algorithm can thus also be trained to identify a further type of event. Training the machine learning algorithm to identify the further type of event can happen in the same way as disclosed for training the machine learning algorithm to identify the type of event. The machine learning algorithm can also be trained to identify more than one further type of event.

That the further type of event is a subset of the type of event can mean that the type of event comprises at least two subsets. Each subset can comprise at least one type of event. A type of event of a subset can be a more special type of event than the type of event. In other words, the type of event of subsets fall under the type of event. As an example, if the type of event to be identified is a rock fall, a subset can be a landslide. The type of event refers in this case to any number of rocks falling. In a landslide a plurality of rocks fall. Another subset can be a single rock falling.

That the further type of event is different from the type of event can mean that the further type of event is no subset of the type of event. For example, the type of event is a rock fall and the further type of event is a passing rail vehicle.

In many cases, different types of events can occur along a linear asset. Therefore, it is advantageous that the machine learning algorithm is trained to identify more than one type of event.

According to at least one embodiment of the method for training a machine learning algorithm, all sensor data is detected by at least one distributed acoustic sensor being arranged along a railway track. This can mean, that all the sensor data is sensor data that is detected by at least one distributed acoustic sensor being arranged along a railway track. It is also possible that the sensor data comprises sets of sensor data that are detected by more than one distributed acoustic sensor, the distributed acoustic sensors being arranged along one railway track or more than one railway track. The trained machine learning algorithm can thus be employed in monitoring a railway track.

According to at least one embodiment of the method for training a machine learning algorithm, the information if the type of event to be identified took place during the detection of the sensor data classified in the third class is obtained by inspecting the place where the sensor data classified in the third class was detected. From sensor data detected by a distributed acoustic sensor it can be determined at which position along the distributed acoustic sensor the sensor data was detected. Thus, it can be determined at which position along the distributed acoustic sensor, sensor data classified in the third class was detected. With this information it is possible to inspect the place where the sensor data classified in the third class was detected. This can for example mean that the place where the sensor data classified in the third class was detected is inspected by a person. It is also possible that the place where the sensor data classified in the third class is inspected by a camera. Inspecting in this case can mean that a person looks at the place in order to find out which event occurred. Inspecting a place is the most reliable way to find out which event occurred. Therefore, the machine learning algorithm is provided with the correct information about the type of event that occurred during the detection of the sensor data classified in the third class. With this, the accuracy of the machine learning algorithm is improved.

According to at least one embodiment of the method for training a machine learning algorithm, a classifier is employed to select sensor data to be employed for training the machine learning algorithm from sensor data detected by at least one distributed acoustic sensor. A distributed acoustic sensor usually can detect a large amount of sensor data. Most of the sensor data does not relate to any event taking place along the distributed acoustic sensor or relates to events that are not of interest. This sensor data most likely does not contribute to the machine learning algorithm getting more accurate. It is rather desired to provide the machine learning algorithm with sensor data that is detected while an event of interest takes place along the distributed acoustic sensor. An event of interest can be an event of the type of event to be identified or another event that leads to similar sensor data as the type of event to be identified. The classifier can be configured to preselect sensor data detected by at least one distributed acoustic sensor. It is also possible that the classifier is employed to select sensor data to be employed for training the machine learning algorithm from sensor data detected by more than one distributed acoustic sensor. Providing the machine learning algorithm with sensor data selected by a classifier has the advantage that the machine learning algorithm can be trained in an efficient way.

According to at least one embodiment of the method for training a machine learning algorithm, the classifier comprises a pre-processing algorithm that is configured to identify the type of event to be identified. The pre-processing algorithm can be configured to identify if the type of event to be identified took place during the detection of sensor data. This can mean that the pre-processing algorithm is configured to identify for a plurality of sets of sensor data provided to the pre-processing algorithm if the type of event to be identified took place during the detection of the respective set of sensor data. The pre-processing algorithm can be less accurate in identifying the type of event to be identified than the trained machine learning algorithm. The pre-processing algorithm can require less computing capacity or storage space than the trained machine learning algorithm. It is thus advantageously possible to employ the pre-processing algorithm to select sensor data from a large amount of sensor data. Only the selected sensor data is then provided to the machine learning algorithm. With this, the total required computing capacity or storage space can be reduced in comparison to the case that no preselection of sensor data takes place.

An example for the pre-processing algorithm is provided in the European patent application with the application number EP 24185681.4 which is hereby incorporated by reference. The pre-processing algorithm can be the computer implemented method described in the patent application with the application number EP 24185681.4.

According to at least one embodiment of the method for training a machine learning algorithm, at least one further classifier is employed to select sensor data to be employed for training the machine learning algorithm from sensor data detected by at least one distributed acoustic sensor, wherein the further classifier comprises a further pre-processing algorithm that is configured to identify the type of event to be identified. All features that are disclosed for the classifier are also disclosed for the further classifier. All features that are disclosed for the pre-processing algorithm are also disclosed for the further pre-processing algorithm. The classifier and the further classifier can be employed in parallel. This can mean, that the classifier is employed to select sensor data from a first amount of sensor data and that the further classifier is employed to select sensor data from a second amount of sensor data. It is also possible that more than one further classifier is employed to select sensor data to be employed for training the machine learning algorithm from sensor data detected by at least one distributed acoustic sensor, wherein the further classifiers each comprise a further pre-processing algorithm that is configured to identify the type of event to be identified. Employing more than one classifier has the advantage that the preselection of sensor data can take place faster.

Furthermore, a computer program product is provided. According to at least one embodiment of the computer program product, the computer program product comprises instructions which, when the program is executed by a computer, cause the computer to carry out the steps of the method for training a machine learning algorithm described herein. Thus, all features disclosed for the method for training a machine learning algorithm are also disclosed for the computer program product.

Furthermore, a non-volatile storage medium comprising the computer program product is provided. Thus, all features disclosed for the computer program product are also disclosed for the non-volatile storage medium.

Furthermore, a method for monitoring a linear asset is provided. According to at least one embodiment of the method for monitoring a linear asset, the method comprises detecting sensor data by at least one distributed acoustic sensor being arranged along the linear asset.

The method for monitoring a linear asset further comprises providing the sensor data to a machine learning algorithm trained with the method for training a machine learning algorithm described herein. Thus, all features disclosed for the method for training a machine learning algorithm are also disclosed for the method for monitoring a linear asset.

The method for monitoring a linear asset further comprises determining by the machine learning algorithm if the type of event to be identified took place during the detection of the sensor data. This can mean, that the machine learning algorithm determines if, according to the machine learning algorithm, the type of event to be identified took place during the detection of the sensor data. In other words, the machine learning algorithms identifies if the type of event to be identified took place during the detection of the sensor data. If the machine learning algorithm detects that the type of event to be identified took place, an alarm can be provided.

The method for monitoring a linear asset can comprise classifying of sensor data detected by at least one distributed acoustic sensor by the machine learning algorithm into the at least three classes of events. Each set of sensor data is classified in only one of the at least three classes of events. For sensor data classified in the first class, the information can be provided that an event of the type of event to be identified is detected.

The machine learning algorithm can thus be employed to analyze sensor data detected by distributed acoustic sensing. The optical fiber can for example be arranged along the linear asset so that the linear asset can be monitored. Monitoring the linear asset can comprise detecting mechanical vibrations occurring on and around the linear asset.

According to at least one embodiment of the method for monitoring a linear asset, the method comprises determining if the further type of event took place during the detection of the sensor data. If the further type of event took place during the detection of sensor data can be determined by the machine learning algorithm or by another algorithm. Determining if the further type of event took place can comprise classifying sensor data of at least one of the three classes into at least two sub-classes. This can mean that sensor data classified in the first class is classified in at least two sub-classes of the first class. If the first class relates to sensor data detected during a rock fall, the two subclasses could be single rock falls and landslides. It is also possible that sensor data classified in the second class is classified in at least two sub-classes of the second class. Sub-classes of the second class can be types of events that are different from the type of event to be identified. It is also possible that sensor data classified in the third class is classified in at least two sub-classes of the third class. Sub-classes of the third class can be subsets of the type of event or events that are different from the type of event to be identified.

Classifying sensor data in sub-classes has the advantage that more information about events along the linear asset can be obtained. If another algorithm is employed for determining if the further type of event took place, the machine learning algorithm can advantageously be employed for a pre-selection of sensor data.

According to at least one embodiment of the method for monitoring a linear asset, sensor data classified in the first class and sensor data classified in the third class is provided to a further machine learning algorithm trained with the method for training a machine learning algorithm described herein and it is determined by the further machine learning algorithm if the type of event to be identified took place during the detection of the provided sensor data. All features disclosed for the machine learning algorithm are also disclosed for the further machine learning algorithm. The machine learning algorithm and the further machine learning algorithm can thus be employed after one another. This can increase the accuracy of determining if the type of event to be identified took place during the detection of sensor data.

It is also possible that the machine learning algorithm and the further machine learning algorithm are employed in a parallel arrangement. This can mean, that a first amount of sensor data is provided to the machine learning algorithm and a second amount of sensor data is provided to the further machine learning algorithm. This enables a fast analysis of large amounts of sensor data.

It is also possible that the machine learning algorithm and more than one further machine learning algorithm are employed either after one another or in a parallel arrangement.

Furthermore, a data processing system is provided. The method for training a machine learning algorithm described herein can be carried out by the data processing system. Thus, all features disclosed for the method for training a machine learning algorithm are also disclosed for the data processing system.

According to at least one embodiment of the data processing system, the data processing system comprises a first training unit that is configured to provide a machine learning algorithm with negative sensor data and to train the machine learning algorithm to identify a type of event, the negative sensor data comprising sensor data detected by at least one distributed acoustic sensor during events that are different from the type of event to be identified. It is also possible that the first training unit is configured to provide the machine learning algorithm with positive sensor data and to train the machine learning algorithm to identify the type of event to be identified.

The data processing system further comprises a classifying unit that is configured to classify sensor data detected by at least one distributed acoustic sensor into at least three classes of events by the machine learning algorithm, the first class comprising the sensor data being classified as positive sensor data, the positive sensor data comprising sensor data detected by the at least one distributed acoustic sensor during at least one event of the type of event to be identified, the second class comprising the sensor data being classified as negative sensor data and the third class comprising sensor data being classified as positive sensor data or negative sensor data with a certainty of less than 100 %.

The data processing system further comprises a second training unit that is configured to provide the machine learning algorithm with the information if the type of event to be identified took place during the detection of sensor data classified in the third class for at least one event classified in the third class.

Furthermore, a monitoring unit for monitoring a linear asset is provided. According to at least one embodiment of the monitoring unit for monitoring a linear asset, the monitoring unit comprises a processor that is configured to run a machine learning algorithm that was trained by the data processing system described herein. Thus, all features disclosed for the data processing system are also disclosed for the monitoring unit for monitoring a linear asset.

The monitoring unit further comprises a detection unit that is configured to receive sensor data that is detected by at least one distributed acoustic sensor being arranged along the linear asset.

The monitoring unit further comprises an evaluation unit that is configured to provide the sensor data to the machine learning algorithm, and to determine if the type of event to be identified took place during the detection of the sensor data. The evaluation unit can be configured to classify sensor data detected by at least one distributed acoustic sensor by the machine learning algorithm into the at least three classes of events. Each set of sensor data is classified in only one of the at least three classes of events. For sensor data classified in the first class, the monitoring unit can be configured to provide the information that an event of the type of event to be identified is detected.

According to at least one embodiment of the monitoring unit for monitoring a linear asset the monitoring unit comprises a classifier that is configured to select sensor data to be provided to the detection unit from sensor data detected by at least one distributed acoustic sensor. The classifier can be configured to preselect sensor data detected by at least one distributed acoustic sensor. It is also possible that the classifier is configured to select sensor data to be provided to the detection unit from sensor data detected by more than one distributed acoustic sensor. Providing the detection unit with sensor data selected by a classifier has the advantage that the machine learning algorithm can be used in an efficient way. Only a smaller amount of sensor data that is preselected by the classifier is provided to the detection unit so that less computational power is required by the monitoring unit.

According to at least one embodiment of the monitoring unit for monitoring a linear asset the classifier comprises a pre-processing algorithm that is configured to identify the type of event to be identified. The pre-processing algorithm can be configured to identify if the type of event to be identified took place during the detection of sensor data. This can mean that the pre-processing algorithm is configured to identify for a plurality of sets of sensor data provided to the pre-processing algorithm if the type of event to be identified took place during the detection of the respective set of sensor data. The pre-processing algorithm can be less accurate in identifying the type of event to be identified than the trained machine learning algorithm. The pre-processing algorithm can require less computing capacity or storage space than the trained machine learning algorithm. It is thus advantageously possible to employ the pre-processing algorithm to select sensor data from a large amount of sensor data. Only the selected sensor data is then provided to the detection unit. With this, the total required computing capacity or storage space can be reduced in comparison to the case that no preselection of sensor data takes place.

An example for the pre-processing algorithm is provided in the European patent application with the application number EP 24185681.4 which is hereby incorporated by reference. The pre-processing algorithm can be the computer implemented method described in the patent application with the application number EP 24185681.4.

According to at least one embodiment of the monitoring unit for monitoring a linear asset the monitoring unit comprises at least one further classifier that is configured to select sensor data to be provided to the detection unit from sensor data detected by at least one distributed acoustic sensor, wherein the further classifier comprises a further pre-processing algorithm that is configured to identify the type of event to be identified. All features that are disclosed for the classifier are also disclosed for the further classifier. All features that are disclosed for the pre-processing algorithm are also disclosed for the further pre-processing algorithm. The classifier and the further classifier can be employed in parallel. This can mean, that the classifier is employed to select sensor data from a first amount of sensor data and that the further classifier is employed to select sensor data from a second amount of sensor data. It is also possible that more than one further classifier is employed to select sensor data to be provided to the detection unit from sensor data detected by at least one distributed acoustic sensor, wherein the further classifiers each comprise a further pre-processing algorithm that is configured to identify the type of event to be identified. Employing more than one classifier has the advantage that the preselection of sensor data can take place faster.

The following description of figures may further illustrate and explain exemplary embodiments. Components that are functionally identical or have an identical effect are denoted by identical references. Identical or effectively identical components might be described only with respect to the figures where they occur first. Their description is not necessarily repeated in successive figures.

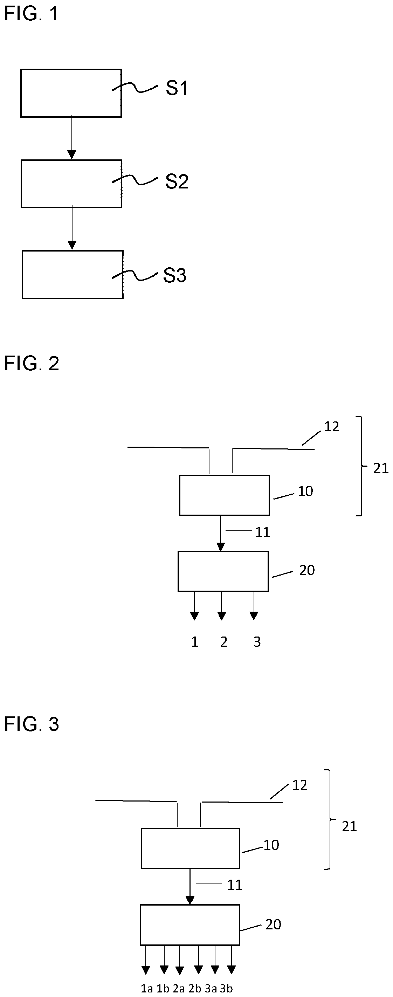

With figure 1 an exemplary embodiment of the method for training a machine learning algorithm is described.

With figures 2, 3, 4, 5, 6 and 7 exemplary embodiments of the method for training a machine learning algorithm and a data processing system are described.

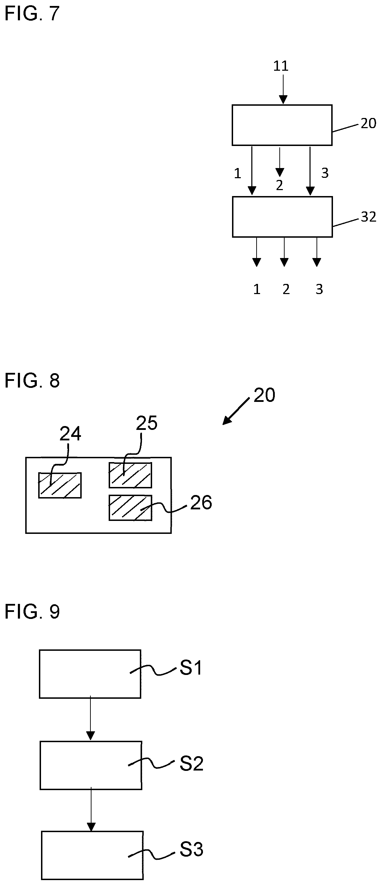

Figure 8 shows an exemplary embodiment of a data processing system.

With figure 9 an exemplary embodiment of a method for monitoring a linear asset is described.

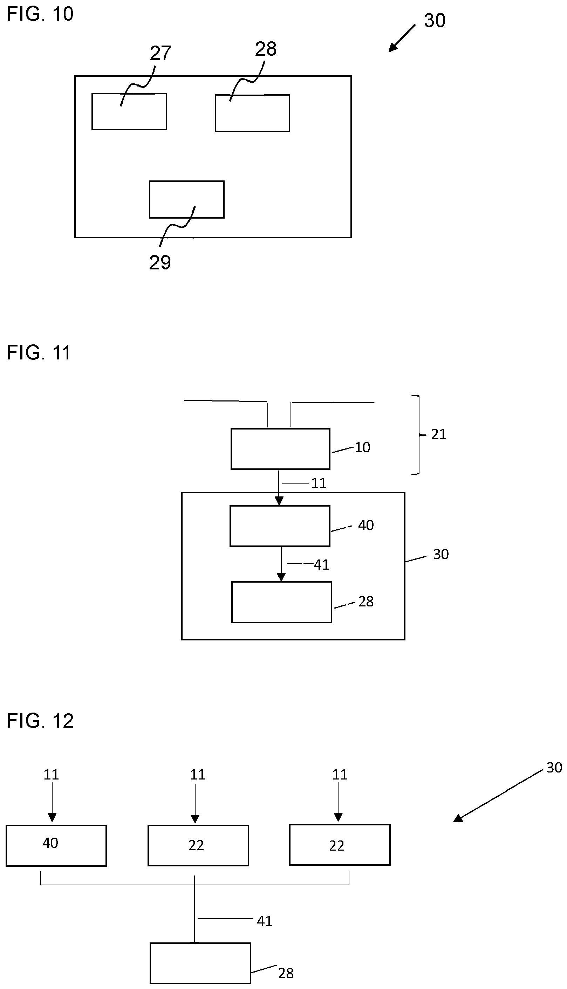

Figures 10, 11, 12, 13, 14 and 15 show exemplary embodiments of a monitoring unit for monitoring a linear asset.

With figure 1 an exemplary embodiment of the method for training a machine learning algorithm is described. In a first step S1 of the method the machine learning algorithm is trained to identify a type of event by providing the machine learning algorithm with negative sensor data, the negative sensor data comprising sensor data 11 detected by at least one distributed acoustic sensor 21 during events that are different from the type of event to be identified. Optionally, in the first step S1 of the method the machine learning algorithm is also trained to identify the type of event to be identified by providing the machine learning algorithm with positive sensor data, the positive sensor data comprising sensor data 11 detected by the at least one distributed acoustic sensor 21 during at least one event of the type of event to be identified. The amount of positive sensor data that the machine learning algorithm is trained with can be smaller than the amount of negative sensor data that the machine learning algorithm is trained with. The type of event to be identified can be a rock fall.

In a second step S2 of the method the machine learning algorithm classifies sensor data 11 detected by at least one distributed acoustic sensor 21 into at least three classes of events, the first class comprising the sensor data 11 being classified as positive sensor data, the second class comprising the sensor data 11 being classified as negative sensor data and the third class comprising sensor data 11 being classified as positive sensor data or negative sensor data with a certainty of less than 100 %.

In a third step S3 of the method the machine learning algorithm is provided with the information if the type of event to be identified took place during the detection of sensor data 11 classified in the third class for at least one event classified in the third class. The information if the type of event to be identified took place during the detection of the sensor data 11 classified in the third class can be obtained by inspecting the place where the sensor data 11 classified in the third class was detected.

With figure 2 another exemplary embodiment of the method for training a machine learning algorithm and a data processing system 20 are described. A detector 10 of a distributed acoustic sensor 21 is connected to an optical fiber 12 of the distributed acoustic sensor 21. The detector 10 is configured to receive backscattered signals from the optical fiber 12. The detector 10 is connected with a data processing system 20. With the data processing system 20 the machine learning algorithm described herein can be trained. The data processing system 20 is described in more detail with figure 8. The detector 10 is configured to provide sensor data 11 to the data processing system 20. The data processing system 20 is configured to classify sensor data 11 detected by the distributed acoustic sensor 21 into at least three classes of events which is indicated by the numbers 1, 2, 3 in figure 2.

With figure 3 another exemplary embodiment of the method for training a machine learning algorithm and a data processing system 20 are described. In comparison to the embodiment shown in figure 2, the machine learning algorithm is further trained to identify a further type of event by providing the machine learning algorithm with further negative sensor data, the further negative sensor data comprising sensor data 11 detected by at least one distributed acoustic sensor 21 during events that are different from the further type of event to be identified, classifying of sensor data 11 detected by at least one distributed acoustic sensor 21 by the machine learning algorithm into at least three classes of further events, the first class of further events comprising the sensor data 11 being classified as further positive sensor data, the further positive sensor data comprising sensor data 11 detected by the at least one distributed acoustic sensor 21 during at least one event of the further type of event to be identified, the second class of further events comprising the sensor data 11 being classified as further negative sensor data and the third class of further events comprising sensor data 11 being classified as further positive sensor data or further negative sensor data with a certainty of less than 100 %, and providing the machine learning algorithm with the information if the further type of event to be identified took place during the detection of sensor data 11 classified in the third class for at least one event classified in the third class, wherein the further type of event is a subset of the type of event or the further type of event is different from the type of event. The first class of the type of event is referred to as 1a in figure 3, the first class of the further type of event is referred to as 1b, the second class of the type of event is referred to as 2a, the second class of the further type of event is referred to as 2b, the third class of the type of event is referred to as 3a and the third class of the further type of event is referred to as 3b.

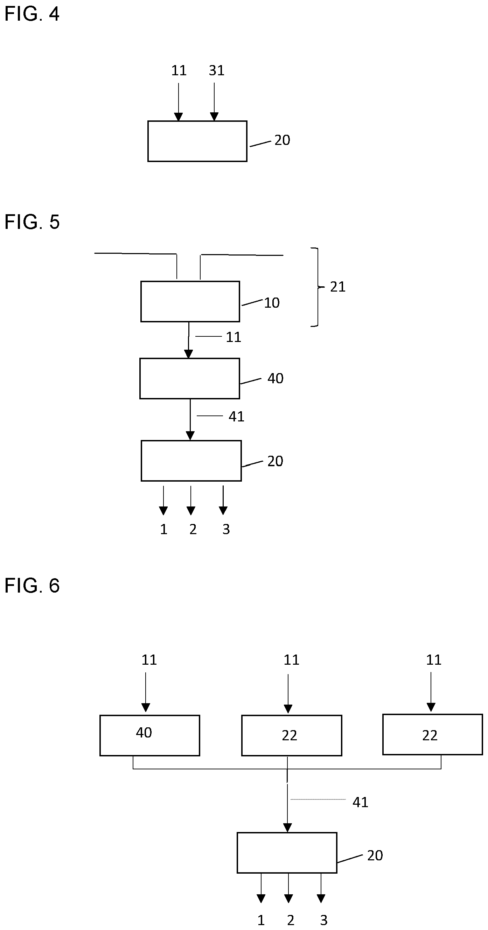

With figure 4 another exemplary embodiment of the method for training a machine learning algorithm and a data processing system 20 are described. Figure 4 shows the data processing system 20. For training the machine learning algorithm, the data processing system 20 is provided with sensor data 11. Furthermore, for negative sensor data provided to the machine learning algorithm, the data processing system 20 is provided with the information that events that are different from the type of event to be identified took place during the detection of the negative sensor data. For positive sensor data provided to the machine learning algorithm, the data processing system 20 is provided with the information that the event to be identified took place during the detection of the positive sensor data. These information (ground truth 31) about the negative sensor data and the positive sensor data are labeled with the reference numeral 31 Figure 4.

With figure 5 another exemplary embodiment of the method for training a machine learning algorithm and a data processing system 20 are described. In comparison to the setup shown in figure 2, additionally a classifier 40 is employed. The classifier 40 is connected with the detector 10. The detector 10 can provide sensor data 11 to the classifier 40. The classifier 40 is configured to select sensor data 11 to be employed for training the machine learning algorithm from sensor data 11 detected by at least one distributed acoustic sensor 21. The classifier 40 comprises a pre-processing algorithm that is configured to identify the type of event to be identified. The classifier 40 can provide selected sensor data 11 to the data processing system 20.

With figure 6 another exemplary embodiment of the method for training a machine learning algorithm and a data processing system 20 are described. In comparison to the set up shown in figure 5, in figure 6 one classifier 40 and two further classifiers 22 are employed. The classifier 40 and the further classifiers 22 are configured to receive sensor data 11 from the detector 10. The classifier 40 and the further classifiers 22 are arranged parallel to each other. Each further classifier 22 is employed to select sensor data 11 to be employed for training the machine learning algorithm from sensor data 11 detected by at least one distributed acoustic sensor 21, wherein the further classifiers 22 each comprise a further pre-processing algorithm that is configured to identify the type of event to be identified. The classifier 40 and the further classifiers 22 are configured to provide preselected sensor data 41 to the data processing system 20.

With figure 7 another exemplary embodiment of the method for training a machine learning algorithm and a data processing system 20 are described. In comparison to the embodiment shown in figure 2, in the embodiment of figure 7 a further machine learning algorithm is trained. The further machine learning algorithm can be trained by a further data processing system 32. The data processing system 20 is configured to provide the further data processing system 32 with sensor data 11 classified in the first class and sensor data 11 classified in the third class. Thus, sensor data 11 classified in the first class and sensor data 11 classified in the third class by the machine learning algorithm is provided to the further machine learning algorithm. The further machine learning algorithm is trained with the method for training a machine learning algorithm described herein. The further machine learning algorithm thus also classifies sensor data 11 that is provided to the further machine learning algorithm into the three classes of events. Employing the machine learning algorithm and the further machine learning algorithm after one another as shown in figure 7 has the advantage that the accuracy of identifying events of the type of event to be identified is increased.

In figure 8 an exemplary embodiment of the data processing system 20 is shown. The data processing system 20 comprises a first training unit 24 that is configured to provide the machine learning algorithm with negative sensor data and to train the machine learning algorithm to identify the type of event. The data processing system 20 further comprises a classifying unit 25 that is configured to classify sensor data 11 detected by at least one distributed acoustic sensor 21 into at least three classes of events by the machine learning algorithm, the first class comprising the sensor data 11 being classified as positive sensor data, the second class comprising the sensor data 11 being classified as negative sensor data and the third class comprising sensor data 11 being classified as positive sensor data or negative sensor data with a certainty of less than 100 %. The data processing system 20 further comprises a second training unit 26 that is configured to provide the machine learning algorithm with the information if the type of event to be identified took place during the detection of sensor data 11 classified in the third class for at least one event classified in the third class.

With figure 9 an exemplary embodiment of the method for monitoring a linear asset 23 is described. In a first step S1 of the method sensor data 11 is detected by at least one distributed acoustic sensor 21 being arranged along the linear asset 23. In a second step S2 of the method the sensor data 11 is provided to the machine learning algorithm that is trained as described herein. In a third step S3 of the method it is determined by the machine learning algorithm if the type of event to be identified took place during the detection of the sensor data 11.

Figure 10 shows an exemplary embodiment of a monitoring unit 30 for monitoring a linear asset 23. The monitoring unit 30 comprises a processor 27 that is configured to run a machine learning algorithm that was trained by the data processing system 20 described herein. The monitoring unit 30 further comprises a detection unit 28 that is configured to receive sensor data 11 that is detected by at least one distributed acoustic sensor 21 being arranged along the linear asset 23. The monitoring unit 30 further comprises an evaluation unit 29 that is configured to provide the sensor data 11 to the machine learning algorithm, and to determine if the type of event to be identified took place during the detection of the sensor data 11. It is also possible that the evaluation unit 29 is configured to determine if at least one further type of event took place during the detection of the sensor data 11.

Figure 11 shows another exemplary embodiment of the monitoring unit 30 for monitoring a linear asset 23. The distributed acoustic sensor 21 comprises a detector 10. The detector 10 is connected with a classifier 40. The monitoring unit 30 comprises the classifier 40. The detector 10 is configured to provide sensor data 11 detected by the distributed acoustic sensor 21 to the classifier 40. The classifier 40 is configured to select sensor data 11 to be provided to the detection unit 28 of the monitoring unit 30 from sensor data 11 provided by the detector 10. The classifier 40 can comprise a pre-processing algorithm that is configured to identify the type of event to be identified. The classifier 40 is connected with the detection unit 28 and is configured to provide preselected sensor data 41 to the monitoring unit 30. The remaining setup of the monitoring unit 30 which is not shown in figure 11 can be as described with figure 10.

Figure 12 shows a part of another exemplary embodiment of the monitoring unit 30 for monitoring a linear asset 23. In comparison to the setup shown in figure 11, in figure 12 the monitoring unit 30 comprises one classifier 40 and two further classifiers 22. The classifier 40 and the further classifiers 22 are configured to receive sensor data 11 from the detector 10. The classifier 40 and the further classifiers 22 are arranged parallel to each other. Each further classifier 22 is employed to select sensor data 11 to be provided to the monitoring unit 30 from sensor data 11 detected by at least one distributed acoustic sensor 21, wherein the further classifiers 22 can each comprise a further pre-processing algorithm that is configured to identify the type of event to be identified. The classifier 40 and the further classifiers 22 are configured to provide preselected sensor data 41 to the detection unit 28.

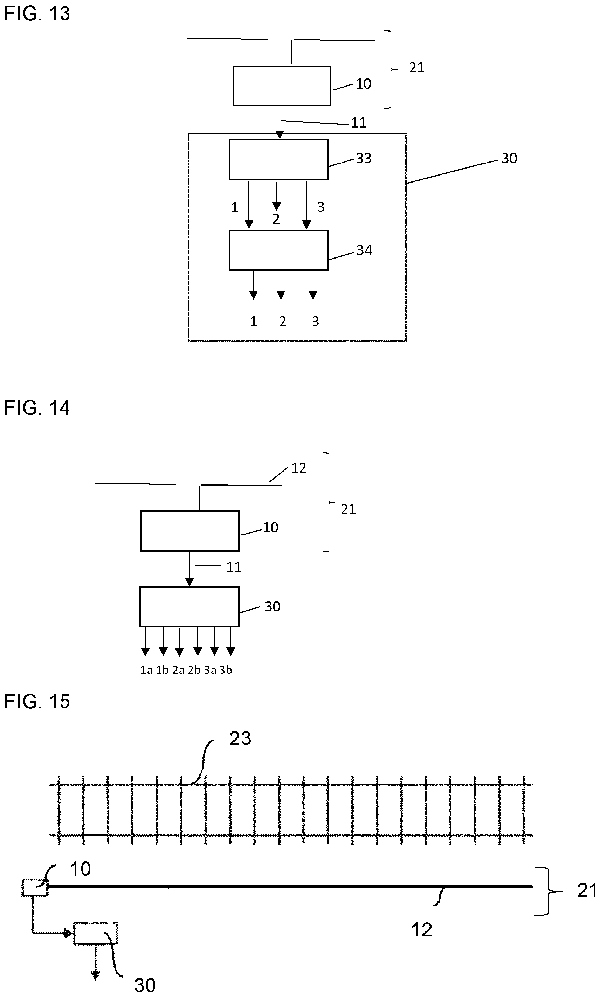

In figure 13 another exemplary embodiment of the monitoring unit 30 for monitoring a linear asset 23 is shown. The detector 10 of the distributed acoustic sensor 21 is connected with the monitoring unit 30. The detector 10 is configured to provide sensor data 11 detected by the distributed acoustic sensor 21 to the monitoring unit 30. The monitoring unit 30 comprises a first sub-monitoring unit 33 and a second sub-monitoring unit 34. The first sub-monitoring unit 33 and the second sub-monitoring unit 34 can each have the setup of a monitoring unit 30 described herein.

The first sub-monitoring unit 33 is configured to classify sensor data 11 detected by the distributed acoustic sensor 21 into the three classes of events. The first sub-monitoring unit 33 is connected with the second sub-monitoring unit 34. The first sub-monitoring unit 33 is configured to provide the second sub-monitoring unit 34 with sensor data 11 classified in the first class and sensor data 11 classified in the third class. Thus, sensor data 11 classified in the first class and sensor data 11 classified in the third class by the machine learning algorithm is provided to the second sub-monitoring unit 34.

The second sub-monitoring unit 34 is configured to classify sensor data 11 received from the first sub-monitoring unit 33 into the three classes of events. Employing two sub-monitoring units 33, 34 has the advantage that the accuracy of identifying events of the type of event to be identified is increased.

In figure 14 another exemplary embodiment of the monitoring unit 30 for monitoring a linear asset 23 is shown. Furthermore, an exemplary embodiment of the method for monitoring a linear asset 23 is described. The monitoring unit 30 is connected with the detector 10 of the distributed acoustic sensor 21 as described with figure 11. The method comprises determining if the further type of event took place during the detection of sensor data 11. The monitoring unit 30 is thus configured to determine if the further type of event took place during the detection of sensor data 11. For this purpose, sensor data 11 of at least one of the three classes is classified into at least two sub-classes. Figure 14 shows that each of the three classes can have at least two sub-classes. However, it is also possible that none, only one or only two of the three classes have at least two sub-classes. The numbers 1a and 1b refer to sub-classes of the first class. The numbers 2a and 2b refer to sub-classes of the second class. The numbers 3a and 3b refer to sub-classes of the third class.

In figure 15 another exemplary embodiment of the monitoring unit 30 for monitoring a linear asset 23 is shown. In this case, the linear asset 23 is a railway track. The distributed acoustic sensor 21 is arranged along the railway track. The distributed acoustic sensor 21 comprises an optical fiber 12 that is arranged along the railway track. The distributed acoustic sensor 21 further comprises a detector 10 that is connected with the optical fiber 12. The detector 10 is configured to detect sensor data 11. The detector 10 is connected with the monitoring unit 30 for monitoring a linear asset 23. The detector 10 is configured to provide sensor data 11 detected by the distributed acoustic sensor 21 to the monitoring unit 30. The monitoring unit 30 can have the setup as shown in figure 10. The monitoring unit 30 can be configured to provide an output signal which is indicated by an arrow in figure 13. The output signal can for example comprise the information which event was identified by the monitoring unit 30.

### Reference numerals

10 detector
11 sensor data
12 optical fiber
20 data processing system
21 distributed acoustic sensor
22 further classifier
23 linear asset
24 first training unit
25 classifying unit
26 second training unit
27 processor
28 detection unit
29 evaluation unit
30 monitoring unit
31 ground truth
32 further data processing system
33 first sub-monitoring unit
34 second sub-monitoring unit
40 classifier
41 preselected sensor data
S1-S3 steps

## Claims

1. Method for training a machine learning algorithm, the method comprising:
- training the machine learning algorithm to identify a type of event by providing the machine learning algorithm with negative sensor data, the negative sensor data comprising sensor data (11) detected by at least one distributed acoustic sensor (21) during events that are different from the type of event to be identified,
- classifying of sensor data (11) detected by at least one distributed acoustic sensor (21) by the machine learning algorithm into at least three classes of events, the first class comprising the sensor data (11) being classified as positive sensor data, the positive sensor data comprising sensor data (11) detected by the at least one distributed acoustic sensor (21) during at least one event of the type of event to be identified, the second class comprising the sensor data (11) being classified as negative sensor data and the third class comprising sensor data (11) being classified as positive sensor data or negative sensor data with a certainty of less than 100 %, and
- providing the machine learning algorithm with the information if the type of event to be identified took place during the detection of sensor data (11) classified in the third class for at least one event classified in the third class.

2. Method for training a machine learning algorithm according to the preceding claim, further comprising training the machine learning algorithm to identify the type of event to be identified by providing the machine learning algorithm with positive sensor data.

3. Method for training a machine learning algorithm according to one of the preceding claims, wherein the amount of positive sensor data that the machine learning algorithm is trained with is smaller than the amount of negative sensor data that the machine learning algorithm is trained with.

4. Method for training a machine learning algorithm according to one of the preceding claims, wherein the type of event to be identified is a rock fall.

5. Method for training a machine learning algorithm according to one of the preceding claims, further comprising training the machine learning algorithm to identify a further type of event by providing the machine learning algorithm with further negative sensor data, the further negative sensor data comprising sensor data (11) detected by at least one distributed acoustic sensor (21) during events that are different from the further type of event to be identified, classifying of sensor data (11) detected by at least one distributed acoustic sensor (21) by the machine learning algorithm into at least three classes of further events, the first class comprising the sensor data (11) being classified as further positive sensor data, the further positive sensor data comprising sensor data (11) detected by the at least one distributed acoustic sensor (21) during at least one event of the further type of event to be identified, the second class comprising the sensor data (11) being classified as further negative sensor data and the third class comprising sensor data (11) being classified as further positive sensor data or further negative sensor data with a certainty of less than 100 %, and providing the machine learning algorithm with the information if the further type of event to be identified took place during the detection of sensor data (11) classified in the third class for at least one event classified in the third class, wherein the further type of event is a subset of the type of event or the further type of event is different from the type of event.

6. Method for training a machine learning algorithm according to one of the preceding claims, wherein all sensor data (11) is detected by at least one distributed acoustic sensor (21) being arranged along a railway track.

7. Method for training a machine learning algorithm according to one of the preceding claims, wherein the information if the type of event to be identified took place during the detection of the sensor data (11) classified in the third class is obtained by inspecting the place where the sensor data (11) classified in the third class was detected.

8. Method for training a machine learning algorithm according to one of the preceding claims, wherein a classifier (40) is employed to select sensor data (11) to be employed for training the machine learning algorithm from sensor data (11) detected by at least one distributed acoustic sensor (21).

9. Method for training a machine learning algorithm according to the preceding claim, wherein the classifier (40) comprises a pre-processing algorithm that is configured to identify the type of event to be identified.

10. Method for training a machine learning algorithm according to one of claims 8 to 9, wherein at least one further classifier (22) is employed to select sensor data (11) to be employed for training the machine learning algorithm from sensor data (11) detected by at least one distributed acoustic sensor (21), wherein the further classifier (22) comprises a further pre-processing algorithm that is configured to identify the type of event to be identified.

11. Computer program product comprising instructions which, when the program is executed by a computer, cause the computer to carry out the steps of the method for training a machine learning algorithm according to one of the preceding claims.

12. Method for monitoring a linear asset (23), the method comprising:
- detecting sensor data (11) by at least one distributed acoustic sensor (21) being arranged along the linear asset (23),
- providing the sensor data (11) to a machine learning algorithm trained with the method for training a machine learning algorithm according to one of claims 1 to 10, and
- determining by the machine learning algorithm if the type of event to be identified took place during the detection of the sensor data (11).

13. Method for monitoring a linear asset (23) according to the preceding claim, wherein sensor data (11) classified in the first class and sensor data (11) classified in the third class is provided to a further machine learning algorithm trained with the method for training a machine learning algorithm according to one of claims 1 to 10 and it is determined by the further machine learning algorithm if the type of event to be identified took place during the detection of the provided sensor data (11).

14. Data processing system (20), the data processing system (20) comprising:
- a first training unit (24) that is configured to provide a machine learning algorithm with negative sensor data and to train the machine learning algorithm to identify a type of event, the negative sensor data comprising sensor data (11) detected by at least one distributed acoustic sensor (21) during events that are different from the type of event to be identified,
- a classifying unit (25) that is configured to classify sensor data (11) detected by at least one distributed acoustic sensor (21) into at least three classes of events by the machine learning algorithm, the first class comprising the sensor data (11) being classified as positive sensor data, the positive sensor data comprising sensor data (11) detected by the at least one distributed acoustic sensor (21) during at least one event of the type of event to be identified, the second class comprising the sensor data (11) being classified as negative sensor data and the third class comprising sensor data (11) being classified as positive sensor data or negative sensor data with a certainty of less than 100 %, and
- a second training unit (26) that is configured to provide the machine learning algorithm with the information if the type of event to be identified took place during the detection of sensor data (11) classified in the third class for at least one event classified in the third class.

15. Monitoring unit (30) for monitoring a linear asset (23), the monitoring unit (30) comprising:
- a processor (27) that is configured to run a machine learning algorithm that was trained by the data processing system (20) according to claim 14,
- a detection unit (28) that is configured to receive sensor data (11) that is detected by at least one distributed acoustic sensor (21) being arranged along the linear asset (23), and
- an evaluation unit (29) that is configured to provide the sensor data (11) to the machine learning algorithm, and to determine if the type of event to be identified took place during the detection of the sensor data (11).
